# EUROPÄISCHE PATENTSCHRIFT

(11) **EP 4 296 090 B1**
(45) Veröffentlichungstag und Bekanntmachung des Hinweises auf die Patenterteilung: **20.11.2024**
(21) Anmeldenummer: 23175313.8
(22) Anmeldetag: 25.05.2023
(51) Int. Cl.: B60C 11/24, B66F 9/00

(54) **GABELSTAPLER**
FORKLIFT
CHARIOT ÉLÉVATEUR À FOURCHE

(30) Priorität: 22.06.2022 IT 202200013171
(43) Veröffentlichungstag der Anmeldung: 27.12.2023
(73) Patentinhaber: Gruber Sas di Gruber Daniel e Lukas & C., 39012 Merano Bolzano (IT)
(72) Erfinder: Gruber, Daniel, 39012 Merano (IT); Gruber, Lukas, 39012 Merano (IT)
(74) Vertreter: Ausserer, Anton

(56) Entgegenhaltungen:
- EP-A1- 3 812 177
- EP-A2- 3 822 223

## Beschreibung

Die vorliegende Erfindung betrifft einen Gabelstapler gemäß dem kennzeichnenden Teil des Anspruchs 1.

### Technisches Gebiet

Gabelstapler werden in Lagerhallen und anderen Orten zum Transportieren und Heben von Gütern eingesetzt. Gabelstapler haben Reifen und diese werden abgenutzt, bei Überschreitung einer bestimmten Grenze brechen die Reifen, was auch zu Schäden an der Fahrzeugachse führen kann.

### Aktueller Stand der Technik

Aus der DE 10201309828 ist ein Transportwagen mit einem Lastteil und einem Antriebsteil bekannt. Dieser Wagen weist eine Sensoreinrichtung (Sensor) auf, die die Position des höhenverstellbaren Radträgers in Bezug auf die Transportfläche erfasst. Diese Vorrichtung erfasst nur den Verschleiß des einzelnen Antriebsrades.

EP 3 822 223 beschreibt ein Verfahren zum Betreiben eines auf Radreifen, insbesondere Superelastik-Reifen oder Luftreifen, auf einem Fahrboden fahrenden Flurförderzeugs, wobei Fahrzeugeigenschaften des Flurförderzeugs von einer Fahrzeugsteuerungseinrichtung gesteuert werden und ein Reifenverschleiß der Radreifen von einer Reifenverschleißmesseinrichtung gemessen wird. Es wird vorgeschlagen, dass mindestens eine Fahrzeugeigenschaft des Flurförderzeugs in Abhängigkeit vom Reifenverschleiß der Radreifen aktiv durch die Fahrzeugsteuerungseinrichtung beeinflusst wird.

EP 3 812 177 beschreibt ein Verfahren zur Ermittlung des Verschleißes von Reifen, insbesondere Superelastikreifen oder Luftreifen, eines Fahrzeugs, insbesondere eines Gabelstaplers, mit mindestens zwei Achsen, insbesondere mindestens einer Vorderachse und mindestens einer Hinterachse, und ein Fahrzeug zur Durchführung des Verfahrens. Es wird vorgeschlagen, mittels mindestens eines am Fahrzeug angebrachten Abstandssensors den Abstand des Abstandssensors zu einer Rollebene zu messen, auf der die Reifen der Räder des Fahrzeugs aufliegen, und mittels mindestens eines am Fahrzeug angebrachten Lagesensors den Neigungswinkel der die Achsen der Räder des Fahrzeugs verbindenden gedachten Achse gegenüber der Rollebene zu messen, und die Messwerte und ein vorgegebener Wert für den Fahrzeugradachsabstand zwischen den Radachsen in einer Datenverarbeitungseinrichtung ausgewertet werden, wobei in der Datenverarbeitungseinrichtung aus den Schwankungen der Messwerte die Veränderungen der Reifendurchmesser an den Radachsen während der Betriebszeit des Fahrzeugs berechnet werden und daraus der Verschleiß der Reifen an den Fahrzeugrädern ermittelt wird.

Diese Vorrichtung und dieses Verfahren erfassen den Verschleiß nur für das gesamte Fahrzeug und für jedes einzelne Rad, außerdem ergibt sich das Problem, dass bei Beladung des Fahrzeugs und/oder ungleichmäßiger Rollfläche die Berechnungen verfälscht werden können.

### Kurzbeschreibung der Erfindung

Es ist eine Aufgabe der vorliegenden Erfindung, die Probleme des Standes der Technik zu beseitigen und einen Gabelstapler mit einem Reifenverschleißerkennungssystem mit einem Bausatz zur Umrüstung eines Gabelstaplers mit einem Reifenverschleißerkennungssystem und einem Verfahren zur Durchführung einer Reifenverschleißerkennung eines Gabelstaplers auszuführen.

Dieser Zweck wird durch ein Verfahren zur Erfassung von Reifenverschleiß an einem Gabelstapler gemäß dem kennzeichnenden Teil des Anspruchs 1 erreicht.

Es wird ein Verfahren zur Erfassung des Reifenverschleißes an einem Gabelstapler vorgeschlagen, bei dem der Gabelstapler ein Fahrgestell mit mindestens zwei Achsen, einer Vorderachse und einer Hinterachse, aufweist, an jeder Achse und/oder Achshalterung ein Ultraschallsensor angebracht ist, der den Abstand der Vorderachse und der Hinterachse in Bezug auf eine Rollebene, auf der die Reifen des Gabelstaplers aufliegen, misst, die Erfassung erfolgt in Intervallen von mindestens 20 Sekunden, wenn der Sensor während des gesamten Zeitraums einen Abstand feststellt, der unter dem eingestellten Wert liegt, wird ein Warnsignal z. B. an eine Warnleuchte auf dem Armaturenbrett des Gabelstaplers für jede Achse ausgegeben. Es können zwei verschiedene Signalpegel bereitgestellt werden: ein erstes Warn- und/oder Warnsignal und ein zweites Warnsignal, wenn die Gefahr besteht, dass der/die Reifen versagen.

Vorteilhaft ist, dass ein vorderer Ultraschallsensor an der Vorderachse und ein hinterer an der Hinterachse angebracht ist.

Das Erkennungssystem kann an die Steuereinheit des Gabelstaplers angeschlossen werden oder es kann ein eigenständiges sekundäres System sein, das nur an das Stromnetz des Gabelstaplers angeschlossen ist.

Das Warn- und/oder Alarmsignal kann auch an ein externes System, z. B. an das Lagerverwaltungssystem, übermittelt werden. Auf diese Weise kann der Radwechsel auch für mehrere Fahrzeuge gleichzeitig programmiert werden, um Kosten zu sparen, da der Wechsel normalerweise von externen Betreibern durchgeführt wird.

Weitere Merkmale und Einzelheiten der Erfindung ergeben sich aus den Ansprüchen und der nachfolgenden Beschreibung einer bevorzugten nicht einschränkenden Ausführungsform, die in den beigefügten Zeichnungen dargestellt ist, wobei diese zeigen:
Figur 1 eine Seitenansicht eines Gabelstaplers, die schematisch das erfindungsgemäße Erkennungssystem zeigt,
Figur 2 eine Draufsicht auf Figur 1,

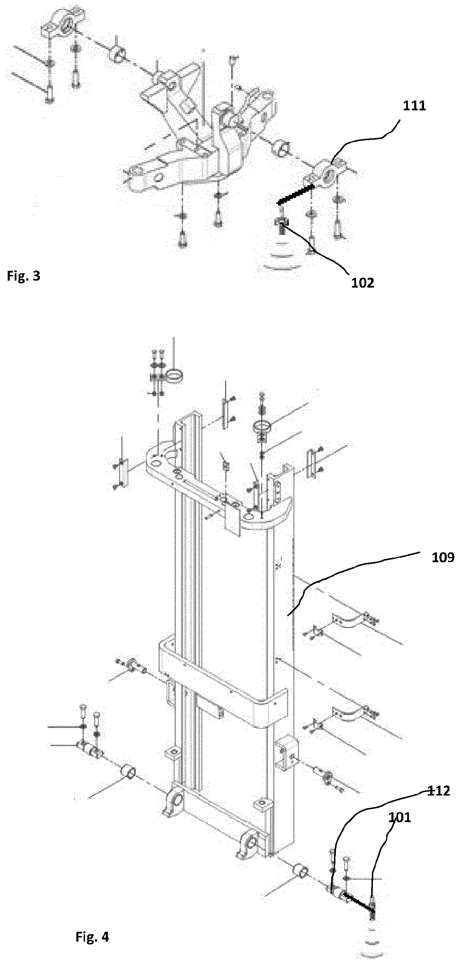

Figur 3 eine Explosionsdarstellung des Sensoranbausystems an der Hinterachse, und
Figur 4 eine Explosionsdarstellung des Sensorbefestigungssystems zwischen dem Hubsystem und der Vorderachse.

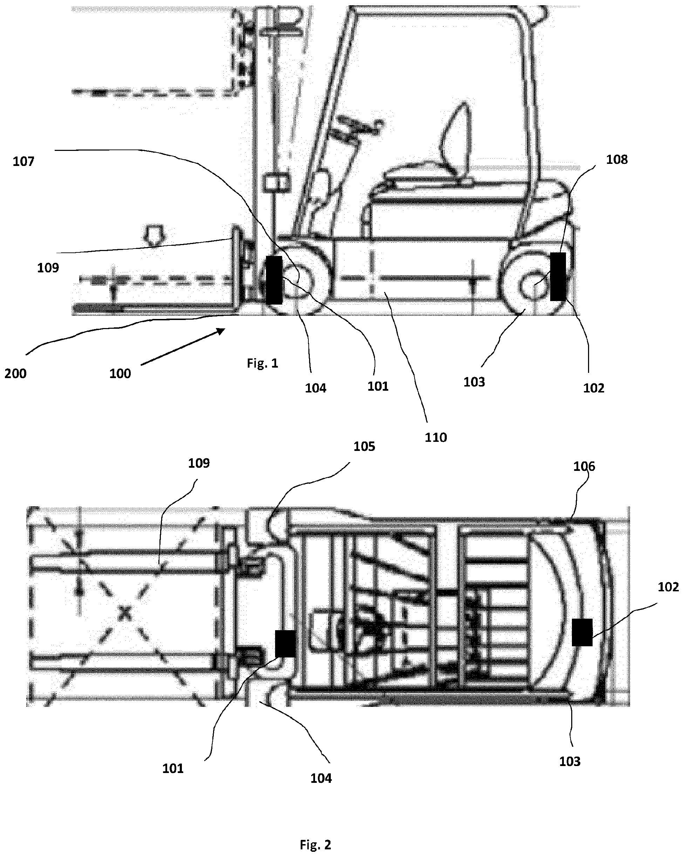

Figur 1 zeigt einen Gabelstapler, der mit der Referenznummer 100 gekennzeichnet ist. Der Gabelstapler 100 hat einen Rahmen 110 mit zwei Achsen 106 und 107, die im Ausführungsbeispiel dargestellt sind, wobei die Achse 108 die Hinterachse und die Achse 107 die Vorderachse des Gabelstaplers 100 ist. Die Vorderachse 107 ist mit zwei Reifen 104 und 105 versehen und die Hinterachse 108 ist mit zwei Reifen 103 und 106 versehen. Bei diesen Reifen handelt es sich vorzugsweise um Vollgummireifen oder Reifen mit einer Luftkammer.

In dem dargestellten Ausführungsbeispiel weist der Gabelstapler 100 eine Hebevorrichtung 109 auf, die vor dem Gabelstapler 100 angeordnet und zum Heben und Tragen von Gütern geeignet ist. Der Gabelstapler 100 verfügt über ein Reifenverschleißerkennungssystem 103, 104, 105 und 106. Dieses Verschleißerkennungssystem kann als Bausatz zur Modifizierung eines Gabelstaplers 100 hergestellt werden. Das Reifenverschleißerkennungssystem weist mindestens zwei Ultraschallsensoren 101 und 102 auf, wobei der erste Ultraschallsensor 101 an der Vorderachse 107 oder am Vorderachsträger 107 vorteilhaft vor der Vorderachse 107 angeordnet ist. Der zweite Ultraschallsensor 102 ist an der Hinterachse 108 bzw. am Hinterachsträger 108 vorteilhaft hinter der Hinterachse 108 angeordnet.

Die Ultraschallsensoren 101 und 102 messen den Abstand zwischen der Vorderachse 107 und der Reifenauflagefläche 200 sowie den Abstand zwischen der Hinterachse 108 und der Reifenauflagefläche 200.

Wird eine Unterschreitung des eingestellten Abstands festgestellt, wird mindestens 20 Sekunden lang eine Dauermessung durchgeführt, und wenn die Messung während des gesamten Zeitraums eine Überschreitung des eingestellten Grenzwerts feststellt, wird ein Warn- und/oder Alarmsignal ausgegeben. Wenn der Messwert während der Messung wieder in den regulären Bereich zurückkehrt, wird die Messung wieder wie zuvor fortgesetzt. Dies kann durch eine unebene Radabrollfläche verursacht werden.

Es können auch mehrere Alarmstufen eingestellt werden, z.B. die Warnung, dass der Reifenverschleiß einen Grenzwert erreicht hat, und eine zweite Stufe, in der konkret ein Reifen 103,104,105,106 bricht und/oder ausfällt.

Dies erleichtert die Planung eines Reifenwechsels 103,104,105,106.

Vorteilhafterweise wird das Warn- und/oder Alarmsignal an eine am Armaturenbrett des Staplers 100 angeordnete Warnleuchte und/oder an ein zentrales Lagerverwaltungssystem gesendet. Das Senden des Signals kann beispielsweise mittels bekannter Wifi-Funkfrequenzen und dergleichen erfolgen und/oder kann beispielsweise während der Ladephase des Fahrzeugs gesendet werden, wenn dieses mit dem zentralen System verbunden ist.

Auf diese Weise kann der Reifenwechsel auch für mehrere Gabelstapler 100 effektiv programmiert werden.

Die Ultraschall-Detektionssensoren sind vorzugsweise an einer zentralen Stelle im Innenraum des Gabelstaplers 100 angeordnet, um das Risiko von Beschädigungen zu verringern. Die ebenfalls externe Befestigung, z.B. an der Vorder- und Hinterachse, ermöglicht die Modifikation bestehender Gabelstapler 100 und auch die Demontage und Verwendung des Systems an anderen Gabelstaplern 100.

Vorteilhafterweise ist der vordere Sensor 101 zwischen der Vorderachse 107 und der Hubeinrichtung 109 mittels einer Ultraschallsensor-Befestigungseinrichtung (111), die ein Drehpunkt ist, angeordnet.

In einer weiteren Ausführungsform ist am Gabelstapler 100 der hintere Sensor 102 mittels der Ultraschallsensor-Befestigungseinrichtung 112 direkt an der Hinterachse 108 befestigt, wobei diese Ultraschallsensor-Befestigungseinrichtung 112 eine Buchse 112 ist.

In einen weiteren Ausführungsform wird der Verschleiß der Reifen der durch den/die Sensoren erfasst wird grafisch dargestellt dies kann auf dem Gabelstapler und/ oder im zentralen System dargestellt werden.

Schließlich versteht es sich, dass Ergänzungen, Änderungen oder Varianten, die für den Fachmann offensichtlich sind, auf das bisher beschriebene Verfahren, den Gabelstapler und/oder den Bausatz angewandt werden können, ohne dass der durch die beigefügten Ansprüche gewährte Schutzumfang verlassen wird.

### Liste der Bezugsnummern

- 100: Gabelstapler
- 101,102: Ultraschallsensoren
- 103,104,105,106: Reifen
- 107: Vorderachse
- 108: Hinterachse
- 109: Hebevorrichtung
- 110: Gabelstapler-Fahrgestell
- 111: Ultraschallsensor-Befestigungsvorrichtung
- 112: Ultraschallsensor-Anbaugerät
- 200: Reifenauflagefläche für Gabelstaplerreifen
- /: Auflagefläche für Reifen

## Patentansprüche

1. Verfahren zur Erfassung des Reifenverschleißes (103, 104, 105, 106) eines Gabelstaplers (100) mit mindestens einer Vorderachse (107) und einer Hinterachse (108), wobei an der Vorderachse (107) und/oder am Vorderachsträger ein Ultraschallsensor (101)
und an der Hinterachse (108) und/oder am Hinterachsträger ein Ultraschallsensor (103) angeordnet ist,
**dadurch gekennzeichnet, dass**,
der an der Vorderachse (107) und/oder am Vorderachsträger angeordnete Ultraschallsensor (101) den Abstandes der Vorderachse (107) von einer Reifenauflagefläche (200) der Reifen (103, 104, 105, 106) misst,
und dass an der Hinterachse (108) und/oder am Hinterachsträger angeordnete Ultraschallsensor (103) den Abstandes der Hinterachse (108) von einer Reifenauflagefläche (200) der Reifen (103, 104, 105, 106) misst,
und dass, wenn der an mindestens einer Achse (107, 108) erfasste Abstand für mindestens 20 Sekunden unterhalb eines Grenzwerts liegt, ein Signal an eine Warnleuchte am Armaturenbrett des Gabelstaplers (100) und/oder an ein externes System zur Steuerung mehrerer Gabelstapler (100) gesendet wird.

2. Verfahren nach Anspruch 1, **dadurch gekennzeichnet, dass** der Ultraschallsensor (101), der sich an der Vorderachse und/oder am Vorderachsträger (107) befindet, vor der Vorderachse (107) angeordnet ist und/oder dass der Ultraschallsensor (102), der sich an der Hinterachse und/oder am Vorderachsträger (108) befindet, hinter der Hinterachse (108) angeordnet ist.

3. Verfahren nach einem der vorhergehenden Ansprüche, **dadurch gekennzeichnet, dass** es mindestens zwei Grenzwerte gibt, bei denen eine Überschreitung des ersten Grenzwertes für mindestens 20 Sekunden ein Warnsignal erzeugt und eine Überschreitung des zweiten Grenzwertes für 20 Sekunden, die kleiner ist als der erste Grenzwert, ein Warnsignal erzeugt.

4. Gabelstapler (100) zur Durchführung eines Verfahrens nach einem der vorhergehenden Ansprüche, wobei der Gabelstapler (100) mindestens eine Vorderachse (107) und eine Hinterachse (108) aufweist,
wobei an der Vorderachse (107) und/oder am Vorderachsträger ein Ultraschallsensor (101)angeordnet ist, wobei an der Hinterachse (108) und/oder am Hinterachsträger ein Ultraschallsensor (103) angeordnet ist,
**dadurch gekennzeichnet**
**dass** der an der Vorderachse (107) und/oder am Vorderachsenträger angeordnete Ultraschallsensor (101) konfiguriert ist zur Messung des Abstandes der Vorderachse von einer Auflagefläche (200) der Reifen (103,104,105,106) und
**dass** der an der Hinterachse (108) und/oder am Hinterachsträger angeordnete Ultraschallsensor (103) konfiguriert ist zur Messung des Abstandes der Vorderachse von einer Auflagefläche (200) der Reifen (103,104,105,106) angeordnet ist,
und **dass** der Gabelstapler (100) mindestens eine Signallampe und/oder Mittel zum Senden eines Signals an ein Managementsystem für mehrere Gabelstapler (100) umfasst.

5. Gabelstapler (100) nach Anspruch 4, **dadurch gekennzeichnet, dass** der vordere Sensor (101) zwischen der Vorderachse (107) und der Hubvorrichtung (109) mittels einer Ultraschallsensor-Befestigungsvorrichtung (111), die ein Drehpunkt ist, angeordnet ist.

6. Gabelstapler (100) nach Anspruch 4 oder 5, **dadurch gekennzeichnet, dass** der hintere Sensor (102) mittels einer Ultraschallsensor-Befestigungseinrichtung (112) direkt an der Hinterachse (108) befestigt ist und dass diese Ultraschallsensor-Befestigungseinrichtung (112) eine Buchse ist.

## Claims

1. Method for detecting tire wear (103, 104, 105, 106) of a forklift truck (100) having at least one front axle (107) and one rear axle (108), wherein an ultrasonic sensor (101) is arranged on the front axle (107) and/or on the front axle carrier
and an ultrasonic sensor (103) is arranged on the rear axle (108) and/or on the rear axle carrier,
**characterized in that**
the ultrasonic sensor (101) arranged on the front axle (107) and/or on the front axle carrier measures the distance of the front axle (107) from a tire contact surface (200) of the tires (103, 104, 105, 106),
and that an ultrasonic sensor (103) arranged on the rear axle (108) and/or on the rear axle carrier measures the distance of the rear axle (108) from a tire contact surface (200) of the tires (103, 104, 105, 106),
and that if the distance detected on at least one axle (107, 108) is below a limit value for at least 20 seconds, a signal is sent to a warning light on the dashboard of the forklift truck (100) and/or to an external system for controlling several forklift trucks (100).

2. Method according to claim 1, **characterized in that** the ultrasonic sensor (101) located on the front axle and/or on the front axle carrier (107) is arranged in front of the front axle (107) and/or **in that** the ultrasonic sensor (102) located on the rear axle and/or on the rear axle carrier (108) is arranged behind the rear axle (108).

3. Method according to one of the preceding claims, **characterized in that** there are at least two limit values, where exceeding the first limit value for at least 20 seconds generates a warning signal and exceeding the second limit value for 20 seconds by an amount smaller than the first limit value generates a warning signal.

4. Forklift truck (100) for carrying out a method according to one of the preceding claims, wherein the forklift truck (100) has at least one front axle (107) and one rear axle (108),
wherein an ultrasonic sensor (101) is arranged on the front axle (107) and/or on the front axle carrier, wherein an ultrasonic sensor (103) is arranged on the rear axle (108) and/or on the rear axle carrier,
characterized
the ultrasonic sensor (101) arranged on the front axle (107) and/or on the front axle carrier is configured to measure the distance of the front axle from a bearing surface (200) of the tires (103, 104, 105, 106) and
that the ultrasonic sensor (103) arranged on the rear axle (108) and/or on the rear axle carrier is configured to measure the distance of the front axle from a bearing surface (200) of the tires (103, 104, 105, 106),
and that the forklift truck (100) comprises at least one signal lamp and/or means for sending a signal to a management system for a plurality of forklift trucks (100).

5. Forklift truck (100) according to claim 4, **characterized in that** the front sensor (101) is arranged between the front axle (107) and the lifting device (109) by means of an ultrasonic sensor attachment device (111) that is a pivot point.

6. Forklift truck (100) according to claim 4 or 5, **characterized in that** the rear sensor (102) is attached directly to the rear axle (108) by means of an ultrasonic sensor attachment device (112), and **in that** this ultrasonic sensor attachment device (112) is a bushing.

## Revendications

1. Procédé de détection de l'usure des pneumatiques (103, 104, 105, 106) d'un chariot élévateur à fourche (100) comportant au moins un essieu avant (107) et un essieu arrière (108), un capteur à ultrasons (101) étant monté sur l'essieu avant (107) et/ou sur le support de l'essieu avant.
et un capteur à ultrasons (103) est disposé sur l'essieu arrière (108) et/ou sur le support d'essieu arrière,
**caractérisé en ce que**,
le capteur à ultrasons (101) disposé sur l'essieu avant (107) et/ou sur le support d'essieu avant mesure la distance entre l'essieu avant (107) et une surface d'appui (200) des pneus (103, 104, 105, 106),
et **en ce que** le capteur à ultrasons (103) disposé sur l'essieu arrière (108) et/ou sur le support d'essieu arrière mesure la distance entre l'essieu arrière (108) et une surface d'appui (200) des pneus (103, 104, 105, 106),
et **en ce que**, lorsque la distance détectée sur au moins un essieu (107, 108) est inférieure à une valeur limite pendant au moins 20 secondes, un signal est envoyé à un voyant d'avertissement sur le tableau de bord du chariot élévateur (100) et/ou à un système externe de commande de plusieurs chariots élévateurs (100).

2. Procédé selon la revendication 1, **caractérisé en ce que** le capteur à ultrasons (101) qui se trouve sur l'essieu avant et/ou sur le support d'essieu avant (107) est disposé devant l'essieu avant (107) et/ou **en ce que** le capteur à ultrasons (102) qui se trouve sur l'essieu arrière et/ou sur le support d'essieu avant (108) est disposé derrière l'essieu arrière (108).

3. Procédé selon l'une des revendications précédentes, **caractérisé en ce qu'**il existe au moins deux valeurs limites pour lesquelles un dépassement de la première valeur limite pendant au moins 20 secondes génère un signal d'avertissement et un dépassement de la deuxième valeur limite pendant 20 secondes, qui est inférieur à la première valeur limite, génère un signal d'avertissement.

4. Chariot élévateur à fourche (100) pour la mise en œuvre d'un procédé selon l'une des revendications précédentes, dans lequel le chariot élévateur à fourche (100) présente au moins un essieu avant (107) et un essieu arrière (108),
un capteur à ultrasons (101) étant disposé sur l'essieu avant (107) et/ou sur le support de l'essieu avant, un capteur à ultrasons (103) étant disposé sur l'essieu arrière (108) et/ou sur le support de l'essieu arrière,
**caractérisé en ce que**
le capteur à ultrasons (101) disposé sur l'essieu avant (107) et/ou sur le support de l'essieu avant est configuré pour mesurer la distance entre l'essieu avant et une surface d'appui (200) des pneus (103, 104, 105, 106) et
**en ce que** le capteur à ultrasons (103) disposé sur l'essieu arrière (108) et/ou sur le support d'essieu arrière est configuré pour mesurer la distance de l'essieu avant par rapport à une surface d'appui (200) des pneus (103, 104, 105, 106),
et **en ce que** le chariot élévateur (100) comprend au moins une lampe de signalisation et/ou des moyens pour envoyer un signal à un système de gestion pour plusieurs chariots élévateurs (100).

5. Chariot élévateur (100) selon la revendication 4, **caractérisé en ce que** le capteur avant (101) est disposé entre l'essieu avant (107) et le dispositif de levage (109) au moyen d'un dispositif de fixation de capteur à ultrasons (111) qui est un pivot.

6. Chariot élévateur à fourche (100) selon la revendication 4 ou 5, **caractérisé en ce que** le capteur arrière (102) est fixé directement à l'essieu arrière (108) au moyen d'un dispositif de fixation de capteur à ultrasons (112) et **en ce que** ce dispositif de fixation de capteur à ultrasons (112) est une douille.
